# EUROPEAN PATENT SPECIFICATION

(11) **EP 2 806 414 B1**
(45) Date of publication and mention of the grant of the patent: **06.07.2016**
(21) Application number: 13168933.3
(22) Date of filing: 23.05.2013
(51) Int. Cl.: G08G 1/16, G06K 9/00

(54) **Driver assistance in passing a narrow thoroughfare**
Fahrerassistenz bei der Durchfahrt eines engen Fahrwegs
Assistance au conducteur dans le passage d'une chaussée étroite

(43) Date of publication of application: 26.11.2014
(73) Proprietor: Harman Becker Automotive Systems GmbH, 76307 Karlsbad (DE)
(72) Inventor: Weyrich, Norman, Shanghai-Pudong Shanghai 201206 (CN); Bergmann, Stephan, 76464 Muggensturm (DE)
(74) Representative: Bertsch, Florian Oliver

(56) References cited:
- EP-A1- 1 906 208
- EP-A1- 2 026 246
- EP-A1- 2 393 295
- DE-A1-102011 113 077

## Description

### Technical Field

Various embodiments relate to a method of assisting a driver of a vehicle in passing a narrow driveway and to a driver assistance entity. In particular, various embodiments relate to techniques which retrieve three-dimensional image data and two-dimensional image data and provide the driver assistance based on the retrieved three-dimensional image data and the two-dimensional image data.

### Background

A typical driving situation is the passing of a narrow driveway. A narrow driveway may be a road construction site, a narrow street with vehicles parking to the left and/or to the right, or, in general, any road which is bounded, particularly sideways, by objects. Often, only a fraction of the entire vehicle width, e.g., only a few centimetres, of free space is available between the outer surface of the vehicle and the bounding objects. Then it may be difficult for a driver of the vehicle to navigate through such a narrow driveway.

Some techniques retrieve three-dimensional image data and two-dimensional image data and provide the driver assistance based on the retrieved three-dimensional image data and the two-dimensional image data. One such technique is known from EP 2 026 246 A1.

Techniques are known which assist the driver in passing the narrow driveway, for example from DE 10 2011 113 077 A1. For example, it is known to use a plurality of sensors, e.g., a combination of several ultrasonic sensors and laser sensors, or a combination of a two-dimensional (2D) camera, a long range radar, and at least two short range radar sensors for gathering information describing the narrow driveway. Based on such gathered information it is possible to provide the driver assistance.

However, such techniques face certain restrictions. For example, providing the plurality of sensors may be expensive and may furthermore require significant system design and maintenance efforts. A mean time between failure may be particularly low for such complex systems.

Therefore, a need exists to provide improved techniques of assisting a driver of a vehicle in passing a narrow driveway. In particular, a need exists for such techniques which provide the assisting in a comparably simple manner and which employ a system architecture which is less complex and relies on only a limited amount of data.

### Summary

This need is met by the features of the independent claims. The dependent claims define embodiments.

According to an aspect, a method of assisting a driver of a vehicle in passing a narrow driveway which is bounded by at least one object is provided. The method comprises retrieving three-dimensional (3D) image data from a time-of-flight (TOF) camera. The method further comprises retrieving 2D image data from a 2D camera. Both, the 3D image data and the 2D image data picture a surrounding of the vehicle, wherein a field of view (FOV) of the TOF camera is at least partially overlapping with the FOV of the 2D camera. The method further comprises determining a position of the at least one object in the 3D image data. For each determined position, the method further comprises identifying a type of the respective object based on at least the 2D image data. In dependence of the determined type of the at least one object and in dependence of the determined position of the at least one object, the method further comprises estimating dimensions of the narrow driveway with respect to the vehicle. The method further comprises selectively providing driver assistance in passing the narrow driveway in dependence of the estimated dimensions.

The 3D image data may specify a lateral position of a respective object and a distance of the respective object with respect to the TOF camera, e.g., along a line of sight. The lateral position, e.g., perpendicular to the line of sight or a center of axis of the FOV, of the respective object may be provided in a 3D image data with a first resolution. A higher (lower) first resolution may correspond to a smaller (larger) pixel size of the 3D image data. For example, the TOF camera may be configured to provide active lighting, e.g. in an infra-red spectral range of the electromagnetic spectrum. In principle, the operation of a TOF camera is known to the skilled person such that there is no need to explain further details in this context.

The 2D camera may be a conventional optical camera with sensitivity in the range of the electromagnetic spectrum corresponding to visible light. For example, the 2D camera may employ a charge-coupled device (CCD)-sensor and/or may employ a complementary metal oxide semiconductor (CMOS)-sensor.

In particular, the 2D and 3D image data may cover a forward surrounding of the vehicle, i.e., a surrounding ahead of a straight driving direction of the vehicle. The overlapping FOVs of the TOF camera and the 2D camera may correspond to a part of the surrounding of the vehicle being covered by, both, the 2D and 3D image data. By such means it is possible to obtain redundant data, describing the same at least one object, from both the TOF camera and the 2D camera.

The determined position of the at least one object may be defined with respect to a reference coordinate system; in this reference coordinate system, the position of the vehicle may be known. In particular, the reference coordinate system may be defined with respect to the vehicle position. For example, the vehicle may be in an origin of the reference coordinate system. In general, determining the position of the at least one object may correspond to: determining dimensions of the at least one object; and/or determining a position of a center of the at least one object; and/or determining a distance between the at least one object and the vehicle; and/or determining a position of the at least one object within a reference coordinate system.

Identifying the type of the respective object may correspond to a classification of the respective object. Based on the classified object type it may be possible to determine whether a particular object indeed bounds the narrow driveway or does not present an obstacle to the vehicle. Not presenting an obstacle may be due to: the object being located outside the narrow driveway; and/or the object not presenting an obstruction to the vehicle. In this regard, it is possible to - in dependence of the determined type of the at least one object - exclude certain objects, e.g., lane markers or traffic lights mounted above the street, from the estimating of the dimensions of the narrow driveway.

The dimensions of the narrow driveway can be estimated spatially resolved, i.e., in dependence of a distance to the vehicle. By such means it may be possible to determine changes in the dimensions of the narrow driveway for varying distances with respect to the vehicle.

By the combination of the two different cameras, i.e., the 2D camera and the TOF camera with provides localized depth information, a well-suited combination of sensors is provided in order to estimate the dimensions of the narrow driveway. The TOF camera typically covers FOV in front of the vehicle corresponding to approximately 40 m. This may be sufficient to timely detect objects and to determine the respective position. It may further be sufficient to predict the narrow driveway for a velocity of the vehicle which is typical for such driving situations, e.g. amounting up to 80 km/h. Thereby, when obtaining the depth information it may be expendable to rely on further sensors besides the TOF camera. The 2D camera is typically able to cover a respective FOV. The combination of both cameras is well-suited for solving the above-mentioned problems. In particular, this is based on the finding that a limitation of each one of the TOF camera and the 2D camera will be balanced by a strength of the other camera. For example, the TOF camera typically delivers pixel exact depth values at a low and comparably coarse first resolution, while the 2D camera augments this information with structural information at a second image resolution which is typically higher than the first image resolution.

It is possible that the identifying of the type of a given object depends on a visual appearance of the given object in the 2D image data. For example, the visual appearance may relate to colors, and/or pattern, and/or texture, and/or brightness and/or luminance, etc. For example, different objects may have different characteristic visual appearances: for example, the visual appearance of the traffic delineator may be decisively distinct from the visual appearance of a neighboring vehicle.

By identifying the type of a given object based on the visual appearance in a 2D image data, a more reliable classification of the at least one object may be possible. Typically, the 2D image data may have a comparably high image resolution such that it may be possible to determine the visual appearance at a comparably high accuracy.

It is possible that the identifying of the type of the given object further depends on at least one of the following: a height of the given object as obtained form the 3D data; and/or the determined position of the given object with respect to the vehicle; and/or the position of the given object with respect to at least one further object. For example, the height of a given object may be determined as follows: based on the determined position of the given object, a distance of the given object with respect to the vehicle may be determined. Based on the determined distance, and further based on a lateral size of the given object in the 2D image data and/or in the 3D image data, the height of the object, along with other dimensions of the object, may be determined. Because of the available localized depth information of the 3D image data, it may be possible to evaluate a scaling factor of the given object in the 2D and/or 3D image data. Based on the scaling factor, it is possible to determine the dimensions of the given object.

The determined position of the given object may be used in combination with certain further assumptions in the classification in the given object. For example, such assumptions may relate to typical arrangements of a particular type of an object in a conventional driving situation. For example, it is possible to assume that neighboring vehicles will be positioned within a driving lane. Driving lanes are typically bounded by traffic delineators, and/or a beam barrier, and/or walls, and/or lane markings. Such assumptions regarding a relative position of various objects with respect to each other corresponding to a typical traffic scenario may be used in order to further verify an assumption made for the particular type of the given object.

By further including elements as mentioned above in the identifying of the type of the given object, a higher accuracy in the object classification may achieved. More reliable driver assistance may be provided when passing the narrow driveway.

It is possible that the providing of the driver assistance is selectively executed if at least one of the following conditions is met: a determined width dimension of the narrow driveway is smaller than a predefined threshold; and/or a change in the determined width dimension of the narrow driveway is larger than a further predefined threshold.

The change may occur over a certain distance and/or time. The change may correspond to a road narrowing. By such means, it may be possible to activate the driver assistance, e.g., when the narrow driveway is first detected. A narrow driveway may be a driveway having a width dimension lower than the threshold or a width that is significantly smaller than a previously detected width.

It is possible to iteratively check whether the at least one condition is met. By such means, even when the vehicle approaches a narrow driveway, the driver assistance may timely and pre-emptively be activated in order to assist the driver when entering and passing through the narrow driveway. The iteratively checking may occur on a time-scale which allows to balance demanding computational needs with short reaction times, e.g., somewhere in the range of a few milliseconds to a few seconds.

The providing of a driver assistance according to the present invention further comprises determining a contiguous driving path in dependence of the determined dimension of the narrow driveway and further taking into account a maximum allowable curvature of the driving path. In some examples, the providing of the driver assistance may further comprise at least one of the following: determining a target driving speed in dependence of at least one of the following: a curvature of the narrow driveway and/or a determined driving path, a distance to a neighboring vehicle, a weather condition, a road condition, a speed limit; and/or determining a critical driving situation in dependence of a movement of a least one neighboring vehicle.

When determining the contiguous driving path which may be continuously followed by the vehicle, it is possible to take into account sudden changes in a width and/or orientation of the narrow driveway. Such a scenario is typical for road construction sites. For example, when taking into account the movement of at least one neighboring vehicle, it is possible to predict a change in the orientation of the narrow driveway even when neither the 2D camera nor the TOF camera can directly observe this change, e.g., because it is hidden from view: for example, a preceding vehicle may already execute a left or right turn, even when this turn is hidden from view of the vehicle. Thereby, the turn may be anticipated. As an effect, the computed driving path may not only be optimized with respect to maximum distance between the vehicle and bounding objects at both sides of the narrow driveway, but also with respect for smoothing such sudden changes in the dimensions of the narrow driveway and/or with respect to sudden changes in an orientation of the narrow driveway.

The movement of the neighboring vehicle can be taken into account when predicting dangerous situations and/or when planning the driving path to avoid such dangerous situations. In this regard, the determining of the contiguous driving path may further depend on the movement of at least one neighboring vehicle.

It is possible that the providing of the driver assistance further comprises user interaction, i.e., outputting information to the driver and/or receiving information from the driver. The user interaction may include at least one of the following: indicating a distance to a boundary of the narrow driveway and/or a distance to at least one of the at least one object; and/or displaying a bird's-eye view of the vehicle including a graphical representation of the narrow driveway; and or displaying a following view including a graphical representation of the narrow driveway; and/or providing a warning if a distance to a boundary of the narrow driving is below a threshold; and/or providing a haptic feedback by applying a force to a steering wheel of the vehicle and/or by applying force to a braking pedal of the vehicle. For example, respective information can be displayed in a head-up display and/or a center console display. For example, the bird's-eye view may correspond to a top view where the driver sees an iconic picture of the vehicle and optionally of a neighboring vehicle from above. It is possible to emphasize distances to the bounding objects on the narrow driveway and to preceding and following neighboring vehicles. It is possible to show such distances color coded. Similar considerations may apply to the following view which may show the vehicle from behind and above; behind the vehicle may correspond to a driving direction of the vehicle and/or to an axis of the vehicle. For example, the warning may include an audio warning and/or visual warning and/or a haptic warning. The audio warning may comprise a sound, e.g., a directional sound which originates from a part of the vehicle interior which lies in the direction from the driver to a place where a distance to a bounding object falls below a threshold. The visual warning may correspond to an illumination of a light source, e.g., a light emitting diode which is positioned in a mirror of the vehicle. For example, if the vehicle is equipped with a head-up display, it is possible to provide the warning there as well. An example of the warning in the head-up display is a color coded distance indicator and/or a direction indicator which indicates that a side of the vehicle with a distance to a bounding object is below a threshold. A warning in the head-up display could also encompass overlaying visible parts of the narrow driveway which have a distance to the vehicle which is below a threshold. For example, the haptic feedback by applying force to the steering wheel may assist the driver in following the determined driving path and thereby in avoiding collision with a bounding object of the narrow driveway.

The warning of a driver may be configured respectively as set forth above. For example, the driver of the vehicle may be warned if the vehicle has a distance below a threshold to a bounding object of the narrow driveway. The warning may be by means of a sound and/or by means of a visual warning and/or by means of a haptic warning. An example of a sound warning is a distance dependent sound. An example of a visual warning is a distance dependent illumination of a light source. For example, if the car is equipped with a head-up display, the warning could be shown there. The warning in the head-up display can be in the form of a color coded and or flashing iconic distance indicator. In another embodiment, it is possible to overlay the visible part of the bounding object which caused the warning with a color coded in the head-up display. When applying force to the brakes of the vehicle, it is possible to apply the force such that the determined target driving speed is maintained.

It is also possible that the determined position of the at least one object is adjusted based on the 2D image data. As typically the 2D image data has a higher second image resolution than the 3D image data, it may be possible to at least adjust the lateral position of the at least one object.

The at least one object may be selected from the group comprising: a lane marking, a neighboring vehicle, a construction lane boundary, a beam barrier, walls, a traffic cone, a traffic delineator. Such objects are typically suited for determining the dimensions of the narrow driveway. For example, in a road construction site the narrow driveway is typically bounded by a beam barrier and/or by traffic delineators and/or by neighboring vehicles. In other words, the type of each object may be selected from this group. It is possible that only such objects are detected: e.g., because objects of other types are discarded and/or because objects of other types cannot be detected due to technical limitations.

It is possible that the determining of the position of the at least one object takes into account a change in the depth information of adjacent pixels in the 3D image data. By such means, it is possible to determine a circumference of the respective object in the 3D image data. From this, it is possible to determine the dimensions of the respective object.

According to a further aspect, a driver assistance entity is provided which is configured to assist a driver of a vehicle in passing a narrow driveway. The driver assistance entity comprises an interface which is configured to retrieve 3D image data from a TOF camera. The interface is further configured to retrieve 2D image data from a 2D camera. Both, the 3D image data and the 2D image data picture the surrounding of the vehicle. A FOV of the TOF camera is at least partially overlapping with the FOV of the 2D camera. The driver assistance entity further comprises at least one processor which is configured to determine a position of the at least one object in the 3D image data. The at least one processor of the driver assistance entity is further configured to identify a type of the respective object based on at least the 2D image data for each determined position. In dependence of the type of the at least one object and in dependence of the determined position of the at least one object, the at least one processor is further configured to estimate dimensions of the narrow to selectively provide driver assistance in passing the narrow driveway in dependence of the estimated dimensions.

The driver assistance entity according to the present aspect may be further configured to execute the method of providing driver assistance according to a further aspect.

For such a driver assistance entity, effects may be achieved which are comparable to the effects which may be achieved for the method of providing driver assistance according to a further aspect.

It is to be understood that the features mentioned above and features yet to be explained can be used not only in the respective combinations indicated, but also in other combinations or in isolation, without departing from the scope of the present invention. Features of the above-mentioned aspects and embodiments may be combined with each other in other embodiments.

The foregoing and additional features and effects will become apparent from the following detailed description when read in conjunction with the accompanying drawings, in which like reference numerals refer to like elements.

### Brief description of the Drawings

FIG. 1 is a schematic illustration of a driver assistance entity.
FIG. 2 illustrates 3D image data and 2D image data having different image resolutions.
FIG. 3 is a schematic illustration of a driving situation where a vehicle passes a narrow driveway.
FIG. 4 is a flowchart of a method of providing driver assistance.

### Detailed description

In the following, embodiments of the invention will be described in detail with reference to the accompanying drawings. It is to be understood that the following description of embodiments is not to be taken in a limiting sense. The scope of the invention is not intended to be limited by the embodiments described hereinafter or by the drawings which are to be taken illustratively only.

The drawings are to be regarded as being schematic representations and elements illustrated in the drawings are not necessarily shown to scale. Rather, the various elements are represented such that their function and general purpose become apparent to a person skilled in the art. Any connection or coupling between the functional blocks, devices, components or other physical or functional units shown in the drawings or described herein may also be implemented by an indirect connection or coupling. A coupling between components may also be established over wireless connection. Functional blocks may be implemented in hardware, firmware, software, or combinations thereof. The features of the various embodiments may be combined with each other, unless specifically noted otherwise.

In the following, techniques will be described which provide driver assistance in passing a narrow driveway. The narrow driveway may be defined as a situation where only little space is available to navigate a vehicle along a driving path. For example, to the left side and/or the right side of the vehicle only a fraction of the dimensions of the vehicle itself may be available between the vehicle and a bounding object, e.g., only a few centimetres. The techniques rely on a sensor fusion of sensor data obtained from a 2D camera and from a TOF camera. By such a particular combination of data, it is possible to estimate dimensions of the narrow driveway accurately while, at the same time, having a system of limited complexity.

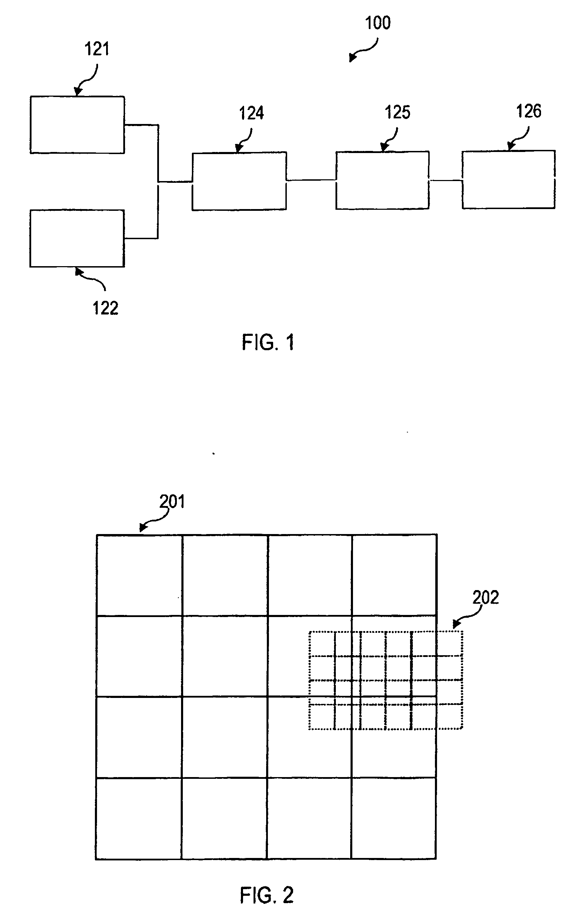

In FIG. 1, a schematic illustration of a driver assistance entity 100 is shown. The driver assistance entity 100 comprises an interface 124 which is in communication with a TOF camera 121 and a 2D camera 122. The TOF camera 121 provides localized depth information for each pixel, i.e., a distance along a line of sight to a pictured object. For example, the communication between the interface 124 and the TOF camera 121 and/or the 2D camera 122 can be established via direct wiring and/or via a vehicle bus system.

Furthermore shown in FIG. 1 is a processor 125 of the driver assistance entity 100, e.g., implemented as a multi-core processor. The processor 125 is configured to execute a number of tasks, including, but not limited to: image analysis of 2D image data obtained from the 2D camera 122 via the interface 124; and/or image analysis of 3D image data obtained from the TOF camera 121 via the interface 124; and/or providing driver assistance in dependence of such image analysis. For example, the processor 125 may be implemented as a plurality of processors located in different parts of the vehicle. For example, it is possible that the parts of the functionality which correspond to the image analysis are provided in a separate physical entity than the parts of the functionality corresponding to the providing of the driver assistance.

As shown in FIG. 1, the driver assistance entity 100 further comprises a human machine interface 126 which may comprise several entities, e.g., a display in a center console of the vehicle, a head-up display, one or more light sources arranged in various positions of the vehicle, e.g., in rear-view mirror, a microphone for speech input by the user, one or more loudspeakers for providing audio output to the user, and/or one or more electrical actuators for providing haptic feedback to the user, e.g. by applying a force to a steering wheel of the vehicle and/or applying force to a braking pedal of the vehicle. It is possible to output information to the user via one or more of these communication channels as outlined before. Respectively it is possible to obtain input from the user via the human machine interface 126, e.g., by voice recognition, and/or by detecting actuation of various control elements such as buttons, knobs, a touch panel, or the like.

The driver assistance entity 100 assists the driver of the vehicle, based on the 2D image data and based on the 3D image data, in keeping the vehicle, e.g. in the middle of the narrow driveway, respectively following an estimated driving path, and/or in maintaining a required distance of the car to one or more neighboring vehicles, in particular with respect to preceding vehicles. The respective techniques which enable to achieve these effects will be described hereinafter.

FIG. 2 illustrates pixels of the 3D image data 201 obtained from the TOF camera 121 and further illustrates pixels (indicated with a dotted line in FIG. 2) of the 2D image data obtained from the 2D camera 122. Each pixel of the 3D image data 201 is associated with localized depth information (not shown in FIG. 2), i.e., a numerical value indicating a distance between the respectively pictured object and the TOF camera 121 along a line of sight. As can be seen from FIG. 2, a first image resolution of the 3D image data 201 is lower than a second image resolution of the 2D image data 202. This is because the lateral dimensions of the pixels shown in FIG. 2 are larger (smaller) for the 3D image data 201 (for the 2D image data 202). Furthermore, it is indicated in FIG. 2 by the arrangement of the 2D image data 202 with respect to the 3D image data 201 that the TOF camera 121 and the 2D camera 122 cover partially overlapping FOVs.

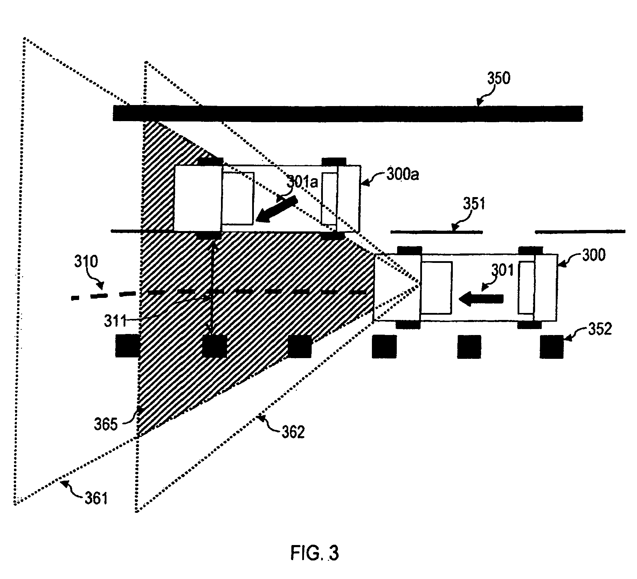

The partially overlapping FOVs 361, 362 of the TOF camera 121 and the 2D camera 122 are also illustrated in FIG. 3. In FIG. 3, a scenario where a vehicle 300 having the driver assistance entity 100 on-board passes a narrow driveway 311 is illustrated. As can be seen, the FOV 361 of the TOF camera 121 extends to slightly remoter distances than the FOV 362 of the 2D camera 122. The overlapping region of the two FOVs 361, 362 is illustrated by the dashed region in FIG. 3. Different configurations/arrangements of the FOVs 361, 362 are possible. E.g., it is possible that the FOV 362 of the 2D camera 122 extends to remoter distances than the FOV 361 of the TOF camera 121.

In the surroundings of the vehicle 300, various objects are present: to the left-hand side of the vehicle 300, traffic delineators 352 bound the narrow driveway. To the right-hand side of the vehicle 300, the narrow driveway is bounded by lane markings 351 and, ahead of the vehicle, by a neighboring vehicle 300a. Further, a beam barrier 350 is shown in FIG. 3; however, the narrow driveway 311 is not bounded by the beam barrier 350, which is too far to the right-hand side of the vehicle 300. The processor 125 (cf. FIG. 1) is configured to determine a position of the objects 300a, 350, 351, 352. Based on the determined positions of the objects 300a, 350, 351, 352, the processor 125 is further configured to identify a type of the respective object based on at least the 2D image data 202 obtained from the 2D camera 122. The 2D image data 202 can be particularly suited for such a classification of the objects 300a, 350, 351, 352 previously detected based on the 3D image data 201. This is because the 2D image data 202 has the higher resolution than the 3D image data 201 (cf. FIG. 2). For example, it is possible that the identifying of the type of the given object 300a, 350, 351, 352 takes into account a visual appearance of the respective object 300a, 350, 351, 352 in the 2D image data 202. Alternatively or additionally, it is possible to take into account the height of the object 300a, 350, 351, 352, the position of the object 300a, 350, 351, 352 either with respect to the vehicle 300 or with respect to a further object 300a, 350, 351, 352.

Based on such a classification of the object 300a, 350, 351, 352, it is then possible to determine which one of the objects 300a, 350, 351, 352 in fact bounds or delimits the narrow driveway 311. In the case of FIG. 3, it is -at a certain position ahead of the vehicle 300 - the neighboring vehicle 300a and the traffic delineators 352. If the position of the respective objects 300a, 352 is also known from the processing of the 3D image data 201, it is possible to estimate dimensions of the narrow driveway 311, in particular a width dimension. The width dimension of the narrow driveway 311, i.e., perpendicular to a movement 301 of the vehicle 300, is illustrated in FIG. 3 by the arrow.

For example, if the width dimension of the narrow driveway 311 is smaller than a threshold or suddenly decreases, it is possible to provide driver assistance. As part of the driver assistance, it is possible to determine a contiguous driving path 310 (illustrated in FIG. 3 by the dashed line). The contiguous driving path 310 can be optimized with respect to various criteria. For example, one or more criteria can be selected from the following group: maximized distance to each bounding object of the narrow driveway; avoidance of dangerous situations based on a determined movement 301 a of the neighboring vehicle 300a; curvature below threshold; minimized curvature; close to a middle of the bounding driveway 311.

As can be seen from FIG. 3, the contiguous driving path 310 is positioned close to the middle of the narrow driveway 311 and, at greater distances ahead of the vehicle 300, slightly turns to the left of the vehicle 300. This left turn of the contiguous driving path 310 is due to the respectively orientated movement 301 a of the neighboring vehicle 300a. By means of this movement 301a of the neighboring vehicle 300a, it is possible to anticipate that the narrow driveway 311 will exhibit a turn to the left at a distance to the vehicle 300 which is not covered by the 2D image data 202 and/or the 3D image data 201. In addition to this determining of the contiguous driving path 310, it is possible to determine a target driving speed taking into account the various parameters of the narrow driving path 311, e.g., its width dimension and/or a curvature of the driving path 310.

As part of the providing of the driver assistance it is then possible to provide haptic feedback, for example by applying a force to the steering wheel of the vehicle 300, the force being suited for assisting the driver and following the driving path 310. This may be done by using an electrical power steering system which may apply a momentum on the steering wheel of the vehicle. Likewise, a force may be applied to braking pedal of the vehicle 300, in order to help the driver to reach the determined target driving speed.

Additionally, it is possible to provide various information on the objects 300a, 350, 351, 352 and/or on the narrow driveway 311 to the driver by means of the human machine interface 126. For this, it is possible to indicate a distance to a boundary and/or at least one bounding object 300a, 352 of the narrow driveway 311, e.g., in a head-up display or a center console display. It is possible to display a bird's-eye view or a following view in order to help the driver to pass through the narrow driveway 311. For example, if there is a critical situation, e.g., the neighboring vehicle 300a strongly turning to the left-hand side and thereby narrowing down the narrow driveway 311 below a threshold, it is possible to provide a warning to the driver of the vehicle. This may be done by illuminating flashing LEDs or the like. It is even possible to initiate an emergency braking.

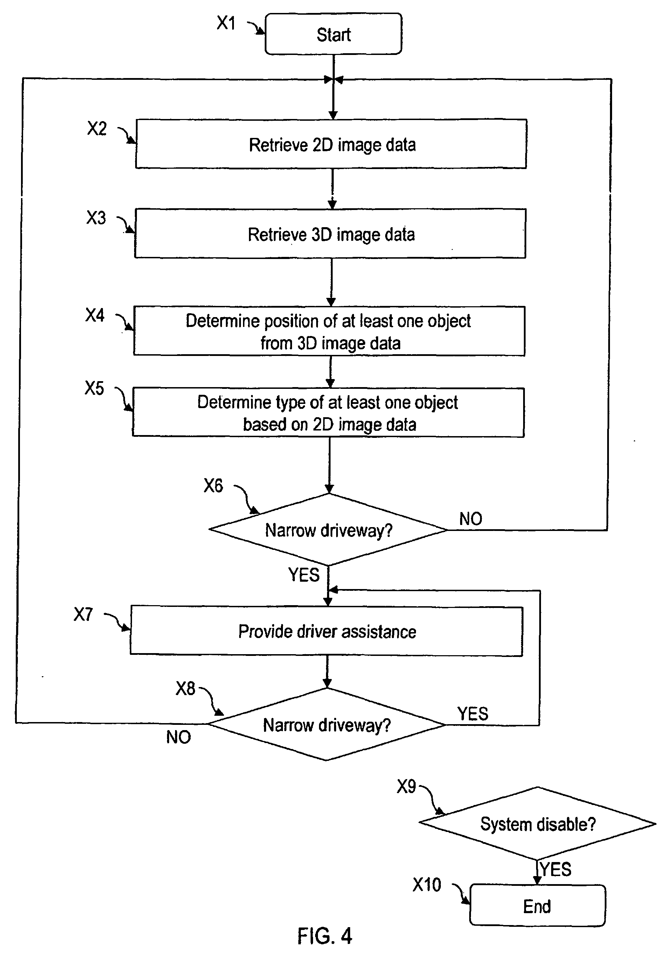

In FIG. 4, a flowchart, of a method of providing driver assistance to a driver of a vehicle 300 when passing the narrow driveway 311 is shown. The method starts in step X1. First, in step X2 the 2D image data 202 is retrieved from the 2D camera 122. Next, in step X3 the 3D image data 201 is retrieved from the TOF camera 121. For this retrieving of the 2D image data 202 and the 3D image data 201, the interface 124 of the driver assistance entity 100 is employed.

In step X4, the processor 125 of the driver assistance entity 100 identifies the various objects 300a, 350, 351, 352 and determines a position for each one of the identified objects 300a, 350, 351, 352.

In step X5, the various identified objects 300a, 350, 351, 352 are classified based on the 2D image data 202. A type of the respective objects 300a, 350, 351, 352 is determined.

Based on the position as obtained from step X4 and further based on the type of the at least one object as obtained from step X5, in step X6 it is checked whether the conditions for a narrow driveway 311 are fulfilled. For example, a narrow driveway may be assumed to be encountered if a width dimension of the narrow driveway 311 is below a threshold or if the width dimension suddenly changes by a certain amount, e.g., if a sudden road narrowing is ahead of the vehicle. If in step X6, no narrow driveway 311 is detected, the method commences with step X2. Otherwise, in step X7, the driver assistance is provided. In particular, it is possible to provide user interfacing which enables the user to follow a determined contiguous driving path.

Again, in step X8, it is confirmed whether the narrow driveway 311 is still encountered. As long as such an iterative checking in step X8 and step X6 confirms that the narrow driveway 311 is encountered, the driver assistance is provided in step X7. Otherwise, the method commences in step X2. As part of step X7, 2D and 3D image data may be recurrently acquired and the position of objects, as well as the object type, may be recurrently determined based on techniques as outlined above.

The method ends when it is detected in step X9 that the system is disabled. Disabling of the system may result from a shutdown of the vehicle 300 and/or a user input. Then, the method ends in step X10.

Although the invention has been shown and described with respect to certain preferred embodiments, equivalents and modifications will occur to others skilled in the art upon reading and understanding the specification. The present invention includes all such equivalents and modifications and is limited only by the scope of the appended claims.

## Claims

1. A method of assisting a driver of a vehicle (300) in passing a narrow driveway (311) which is bounded by at least one object (300a, 350, 351, 352),
the method comprising:
- retrieving three-dimensional, 3D, image data (201) from a time-of-flight camera (121),
- retrieving two-dimensional, 2D, image data (202) from a 2D camera (122),
wherein both the 3D image data (201) and the 2D image data (202) picture a surrounding of the vehicle (300),
wherein a field of view (361) of the time-of-flight camera (121) is at least partially overlapping with a field of view (362) of the 2D camera,
- determining a position of the at least one object (300a, 350, 351, 352) in the 3D image data (201),
- for each determined position: identifying a type of the respective object (300a, 350, 351, 352) based on at least the 2D image data (202),
- in dependence of the determined type of the at least one object (300a, 350, 351, 352) and in dependence of the determined position of the at least one object (300a, 350, 351, 352): estimating dimensions of the narrow driveway (311) with respect to the vehicle (300),
- selectively providing driver assistance in passing the narrow driveway (311) in dependence of the estimated dimensions,
wherein the providing of the driver assistance further comprises:
- determining a contiguous driving path (310) in dependence of the determined dimensions of the narrow driveway (311) and further taking into account a maximum allowable curvature of the driving path.

2. The method of claim 1,
wherein the identifying of the type of a given object (300a, 350, 351, 352) depends on a visual appearance of the given object (300a, 350, 351, 352) in the 2D image data (202).

3. The method of claim 2,
wherein the identifying of the type of the given object (300a, 350, 351, 352) further depends on at least one of the following:
- a height of the given object (300a, 350, 351, 352) as obtained from the 3D image data (201);
- the determined position of the given object (300a, 350, 351, 352) with respect to the vehicle (300);
- the position of the given object (300a, 350, 351, 352) with respect to at least one further object (300a, 350, 351, 352).

4. The method of any one of the preceding claims,
wherein the providing of the driver assistance is selectively executed if at least one of the following conditions is met:
- a determined width dimension of the narrow driveway (311) is smaller than a predefined threshold;
- a change in the determined width dimension of the narrow driveway (311) is larger than a further predefined threshold.

5. The method of claim 4,
further comprising:
- iteratively checking whether at least one of the conditions is met.

6. The method of claim 1,
wherein the determining of the contiguous driving path further depends on a movement (310a) of at least one neighboring vehicle (300a).

7. The method of any one of claims 1 or 6,
wherein the providing of the driver assistance further comprises user interaction, wherein the user interaction includes at least one of the following:
- indicating a distance to a boundary of the narrow driveway (311) and/or a distance to at least one of the at least one object (300a, 350, 351, 352);
- displaying a bird's-eye-view of the vehicle (300) including a graphical representation of the narrow driveway (311);
- displaying a following view including a graphical representation of the narrow driveway (311);
- providing a warning if a distance to a boundary of the narrow driveway (311) is below a threshold;
- providing a haptic feedback by applying force to a steering wheel of the vehicle (300) and/or by applying force to a breaking pedal of the vehicle (300).

8. The method of any one of the preceding claims,
further comprising:
- adjusting the determined position of the at least one object (300a, 350, 351, 352) based on the 2D image data (202).

9. The method of any one of the preceding claims,
wherein the at least one object (300a, 350, 351, 352) is selected from the group comprising: a lane marking (351), a neighbouring vehicle (300a), a construction lane boundary, a beam barrier (350), walls, a traffic cone, a traffic delineator (352).

10. The method of any one of the preceding claims,
wherein the 3D image data (201) has a first resolution,
wherein the 2D image data (202) has a second resolution,
wherein the first resolution is smaller than the second resolution.

11. The method of any one of the preceding claims,
wherein the determining of the position of the at least one object (300a, 350, 351, 352) takes into account a change in a depth information of adjacent pixels in the 3D image data (201).

12. The method of any one of the preceding claims,
wherein the providing of the driver assistance further comprises at least one of the following:
- determining a target driving speed in dependence of at least one of the following: a curvature of the narrow driveway (311) and/or of a determined driving path, a distance to a neighboring vehicle (300a), a weather condition, a road condition, a speed limit;
- determining a critical driving situation in dependence of a movement of at least one neighboring vehicle (300a).

13. Driver assistance entity (100) which is configured to assist a driver of a vehicle (300) in passing a narrow driveway (311),
the driver assistance entity (100) comprising:
- an interface (124) which is configured to retrieve 3D image data (201) from a time-of-flight camera (121), and which is further configured to retrieve 2D image data (202) from a 2D camera (122),
wherein both the 3D image data (201) and the 2D image data (202) picture a surrounding of the vehicle (300),
wherein a field of view (361) of the time-of-flight camera (121) is at least partially overlapping with a field of view (362) of the 2D camera,
- at least one processor (125) which is configured to:
- determine a position of the at least one object (300a, 350, 351, 352) in the 3D image data (201),
- for each determined position: identify a type of the respective object (300a, 350, 351, 352) based on at least the 2D image data (202),
- in dependence of the determined type of the at least one object (300a, 350, 351, 352) and in dependence of the determined position of the at least one object (300a, 350, 351, 352): estimate dimensions of the narrow driveway (311) with respect to the vehicle (300),
- selectively provide driver assistance in passing the narrow driveway (311) in dependence of the estimated dimensions,
wherein the providing of the driver assistance further comprises:
- determining a contiguous driving path (310) in dependence of the determined dimensions of the narrow driveway (311) and further taking into account a maximum allowable curvature of the driving path.

14. Driver assistance entity of claim 13,
wherein the driver assistance entity (100) is further configured to execute a method of any one of the claims 1 - 12.

## Patentansprüche

1. Verfahren zum Assistieren eines Fahrers eines Fahrzeugs (300) bei der Durchfahrt eines engen Fahrwegs (311), der durch zumindest ein Objekt (300a, 350, 351, 352) beschränkt wird,
wobei das Verfahren Folgendes umfasst:
- Abrufen von dreidimensionalen (3D) Bilddaten (201) von einer Laufzeitkamera (121),
- Abrufen von zweidimensionalen (2D) Bilddaten (202) von einer 2D-Kamera (122),
wobei sowohl die 3D-Bilddaten (201) als auch die 2D-Bilddaten (202) eine Umgebung des Fahrzeugs (300) abbilden,
wobei ein Bildausschnitt (361) der Laufzeitkamera (121) sich zumindest teilweise mit einem Bildausschnitt (362) der 2D-Kamera überschneidet,
- Bestimmen einer Position des zumindest einen Objekts (300a, 350, 351, 352) in den 3D-Bilddaten (201).
- für jede bestimmte Position: Identifizieren eines Typs des jeweiligen Objekts (300a, 350, 351, 352) basierend auf zumindest den 2D-Bilddaten (202),
- in Abhängigkeit von dem bestimmten Typ des zumindest einen Objekts (300a, 350, 351, 352) und in Abhängigkeit von der bestimmten Position des zumindest einen Objekts (300a, 350, 351, 352): Schätzen der Abmessungen des engen Fahrwegs (311) bezüglich des Fahrzeugs (300),
- selektives Bereitstellen von Fahrerassistenz bei der Durchfahrt des engen Fahrwegs (311) in Abhängigkeit von den geschätzten Abmessungen,
wobei das Bereitstellen der Fahrerassistenz ferner Folgendes umfasst:
- Bestimmen einer zusammenhängenden Fahrspur (310) in Abhängigkeit von den bestimmten Abmessungen des engen Fahrwegs (311) und ferner Beachten einer maximal zulässigen Krümmung der Fahrspur.

2. Verfahren nach Anspruch 1,
wobei das Identifizieren des Typs eines gegebenen Objekts (300a, 350, 351, 352) von einem visuellen Erscheinungsbild des gegebenen Objekts (300a, 350, 351, 352) in den 2D-Bilddaten (202) abhängt.

3. Verfahren nach Anspruch 2,
wobei das Identifizieren des Typs des gegebenen Objekts (300a, 350, 351, 352) ferner zumindest von einem des Folgenden abhängt:
- einer Höhe des gegebenen Objekts (300a, 350, 351, 352), wie von den 3D-Bilddaten (201) erhalten;
- der bestimmten Position des gegebenen Objekts (300a, 350, 351, 352) bezüglich des Fahrzeugs (300);
- der Position des gegebenen Objekts (300a, 350, 351, 352) bezüglich zumindest eines weiteren Objekts (300a, 350, 351, 352).

4. Verfahren nach einem der vorhergehenden Ansprüche,
wobei das Bereitstellen der Fahrerassistenz selektiv ausgeführt wird, falls zumindest eine der folgenden Bedingungen erfüllt ist:
- ein bestimmtes Breitenmaß des engen Fahrwegs (311) ist kleiner als ein vorgegebener Grenzwert;
- eine Veränderung des bestimmten Breitenmaßes des engen Fahrwegs (311) ist größer als ein weiterer vorgegebener Grenzwert.

5. Verfahren nach Anspruch 4,
ferner umfassend:
- iteratives Überprüfen, ob zumindest eine der Bedingungen erfüllt ist.

6. Verfahren nach Anspruch 1,
wobei das Bestimmen der zusammenhängenden Fahrspur ferner von einer Bewegung (310a) zumindest eines benachbarten Fahrzeugs (300a) abhängt.

7. Verfahren nach einem der Ansprüche 1 oder 6,
wobei das Bereitstellen der Fahrerassistenz ferner Benutzerinteraktion umfasst, wobei die Benutzerinteraktion zumindest eines des Folgenden umfasst:
- Angeben einer Distanz zu einer Begrenzung des engen Fahrwegs (311) und/oder einer Distanz zu zumindest einem des zumindest einen Objekts (300a, 350,351,352);
- Anzeigen einer Vogelperspektive des Fahrzeugs (300), die eine grafische Darstellung des engen Fahrwegs (311) umfasst;
- Anzeigen einer folgenden Ansicht, die eine grafische Darstellung des engen Fahrwegs (311) umfasst;
- Bereitstellen einer Warnung, falls eine Distanz zu einer Begrenzung des engen Fahrwegs (311) unter einem Grenzwert liegt;
- Bereitstellen einer haptischen Rückkopplung durch Anwenden einer Kraft auf ein Lenkrad des Fahrzeugs (300) und/oder Anwenden einer Kraft auf ein Bremspedal des Fahrzeugs (300).

8. Verfahren nach einem der vorhergehenden Ansprüche,
ferner umfassend:
- Anpassen der bestimmten Position des zumindest einen Objekts (300a, 350, 351, 352) basierend auf den 2D-Bilddaten (202).

9. Verfahren nach einem der vorhergehenden Ansprüche,
wobei das zumindest eine Objekt (300a, 350, 351, 352) ausgewählt wird aus der Gruppe, bestehend aus: einer Fahrbahnmarkierung (351), einem benachbarten Fahrzeug (300a), einer Begrenzung einer Baustellenspur, einer Leitplanke (350), Mauern, einem Verkehrskegel, einem Verkehrsleitpfosten (352).

10. Verfahren nach einem der vorhergehenden Ansprüche,
wobei die 3D-Bilddaten (201) eine erste Auflösung aufweisen,
wobei die 2D-Bilddaten (202) eine zweite Auflösung aufweisen,
wobei die erste Auflösung geringer als die zweite Auflösung ist.

11. Verfahren nach einem der vorhergehenden Ansprüche,
wobei das Bestimmen der Position des zumindest einen Objekts (300a, 350, 351, 352) eine Veränderung einer Tiefeninformation benachbarter Pixel in den 3D-Bilddaten (201) berücksichtigt.

12. Verfahren nach einem der vorhergehenden Ansprüche,
wobei das Bereitstellen der Fahrerassistenz ferner zumindest eines des Folgenden umfasst:
- Bestimmen einer Ziel-Fahrgeschwindigkeit in Abhängigkeit von zumindest einem der Folgenden: einer Krümmung des engen Fahrwegs (311) und/oder einer bestimmten Fahrspur, einer Distanz zu einem benachbarten Fahrzeug (300a), einer Witterungsbedingung, einem Straßenzustand, einer Geschwindigkeitsbegrenzung;
- Bestimmen einer kritischen Fahrsituation in Abhängigkeit von einer Bewegung von zumindest einem benachbarten Fahrzeug (300a).

13. Fahrerassistenzeinheit (100), die konfiguriert ist, um einem Fahrer eines Fahrzeugs (300) bei der Durchfahrt eines engen Fahrwegs (311) zu assistieren, wobei die Fahrerassistenzeinheit (100) Folgendes umfasst:
- eine Schnittstelle (124), die konfiguriert ist, um 3D-Bilddaten (201) von einer Laufzeitkamera (121) abzurufen, und die ferner konfiguriert ist, um 2D-Bilddaten (202) von einer 2D-Kamera (122) abzurufen,
wobei sowohl die 3D-Bilddaten (201) als auch die 2D-Bilddaten (202) eine Umgebung des Fahrzeuges (300) abbilden,
wobei ein Bildausschnitt (361) der Laufzeitkamera (121) sich zumindest teilweise mit einem Bildausschnitt (362) der 2D-Kamera überschneidet,
- zumindest einen Prozessor (125), der für Folgendes konfiguriert ist:
- Bestimmen einer Position zumindest eines Objekts (300a, 350, 351, 352) in den 3D-Bilddaten (201).
- für jede bestimmte Position: Identifizieren eines Typs des jeweiligen Objekts (300a, 350, 351, 352) basierend auf zumindest den 2D-Bilddaten (202),
- in Abhängigkeit von dem bestimmten Typ des zumindest einen Objekts (300a, 350, 351, 352) und in Abhängigkeit von der bestimmten Position des zumindest einen Objekts (300a, 350, 351, 352): Schätzen der Abmessungen des engen Fahrwegs (311) bezüglich des Fahrzeugs (300),
- selektives Bereitstellen von Fahrerassistenz bei der Durchfahrt des engen Fahrwegs (311) in Abhängigkeit von den geschätzten Abmessungen,
wobei das Bereitstellen der Fahrerassistenz ferner Folgendes umfasst:
- Bestimmen einer zusammenhängenden Fahrspur (310) in Abhängigkeit von den bestimmten Abmessungen des engen Fahrwegs (311) und ferner Beachten einer maximal zulässigen Krümmung der Fahrspur.

14. Fahrerassistenzeinheit nach Anspruch 13,
wobei die Fahrerassistenzeinheit (100) ferner konfiguriert ist, um ein Verfahren nach einem der Ansprüche 1 bis 12 auszuführen.

## Revendications

1. Procédé d'assistance à un conducteur d'un véhicule (300) lors du passage d'une voie de circulation étroite (311) qui est délimitée par au moins un objet (300a, 350, 351, 352),
le procédé comprenant :
- la récupération de données d'image, 3D, en trois dimensions (201) à partir d'une caméra temps de vol (121),
- la récupération de données d'image, 2D, en deux dimensions (202) à partir d'une caméra 2D (122),
dans lequel à la fois les données d'image 3D (201) et les données d'image 2D (202) représentent un environnement du véhicule (300),
dans lequel un champ de vision (361) de la caméra temps de vol (121) chevauche au moins en partie un champ de vision (362) de la caméra 2D,
- la détermination d'une position de l'au moins un objet (300a, 350, 351, 352) dans les données d'image 3D (201),
- pour chaque position déterminée : l'identification d'un type de l'objet respectif (300a, 350, 351, 352) basé sur au moins les données d'image 2D (202),
- en fonction du type déterminé de l'au moins un objet (300a, 350, 351, 352) et en fonction de la position déterminée de l'au moins un objet (300a, 350, 351, 352) : l'estimation des dimensions de la voie de circulation étroite (311) par rapport au véhicule (300),
- la fourniture sélective d'assistance au conducteur lors du passage de la voie de circulation étroite (311) en fonction des dimensions estimées,
dans lequel la fourniture de l'assistance au conducteur comprend en outre :
la détermination d'un trajet contigu (310) en fonction des dimensions déterminées de la voie de circulation étroite (311) et en outre la prise en compte d'une courbure maximum admissible du trajet.

2. Procédé selon la revendication 1,
dans lequel l'identification du type d'un objet donné (300a, 350, 351, 352) dépend d'une apparence visuelle de l'objet donné (300a, 350, 351, 352) dans les données d'image 2D (202).

3. Procédé selon la revendication 2,
dans lequel l'identification du type de l'objet donné (300a, 350, 351, 352) dépend en outre d'au moins un des suivants :
- une hauteur de l'objet donné (300a, 350, 351, 352) telle qu'obtenue à partir des données d'image 3D (201) ;
- la position déterminée de l'objet donné (300a, 350, 351, 352) par rapport au véhicule (300) ;
- la position de l'objet donné (300a, 350, 351, 352) par rapport à au moins un autre objet (300a, 350, 351, 352).

4. Procédé selon l'une quelconque des revendications précédentes,
dans lequel la fourniture de l'assistance au conducteur est sélectivement exécutée si au moins une des conditions suivantes est remplie :
- une dimension de largeur déterminée de la voie de circulation étroite (311) est inférieure à un seuil prédéfini ;
- un changement de la dimension de largeur déterminée de la voie de circulation étroite (311) est supérieur à un autre seuil prédéfini.

5. Procédé selon la revendication 4,
comprenant en outre :
- le contrôle itératif si au moins une des conditions est remplie.

6. Procédé selon la revendication 1,
dans lequel la détermination du trajet contigu dépend en outre d'un mouvement (310a) d'au moins un véhicule voisin (300a).

7. Procédé selon l'une quelconque des revendications 1 ou 6,
dans lequel la fourniture de l'assistance au conducteur comprend en outre l'interaction avec l'utilisateur,
dans lequel l'interaction avec l'utilisateur comprend au moins un des suivants :
- l'indication d'une distance par rapport à une délimitation de la voie de circulation étroite (311) et/ou d'une distance par rapport à au moins un de l'au moins un objet (300a, 350, 351, 352) ;
- l'affichage d'une vue à vol d'oiseau du véhicule (300) comprenant une représentation graphique de la voie de circulation étroite (311) ;
- l'affichage d'une vue suivante comprenant une représentation graphique de la voie de circulation étroite (311) ;
- la fourniture d'un avertissement si une distance par rapport à une délimitation de la voie de circulation étroite (311) est inférieure à un seuil ;
- la fourniture d'une rétroaction haptique par application d'une force à un volant du véhicule (300) et/ou par application d'une force à une pédale de freinage du véhicule (300).

8. Procédé selon l'une quelconque des revendications précédentes,
comprenant en outre :
- l'ajustage de la position déterminée de l'au moins un objet (300a, 350, 351, 352) basée sur les données d'image 2D (202).

9. Procédé selon l'une quelconque des revendications précédentes,
dans lequel l'au moins un objet (300a, 350, 351, 352) est choisi dans le groupe comprenant : un marquage au sol (351), un véhicule voisin (300a), une délimitation de voie constructive, une glissière de sécurité (350), des parois, un cône de signalisation, un délinéateur (352).

10. Procédé selon l'une quelconque des revendications précédentes,
dans lequel les données d'image 3D (201) ont une première résolution,
dans lequel les données d'image 2D (202) ont une deuxième résolution,
dans lequel la première résolution est inférieure à la deuxième résolution.

11. Procédé selon l'une quelconque des revendications précédentes,
dans lequel la détermination de la position de l'au moins un objet (300a, 350, 351, 352) prend en compte un changement d'une information de profondeur de pixels adjacents dans les données d'image 3D (201).

12. Procédé selon l'une quelconque des revendications précédentes,
dans lequel la fourniture de l'assistance au conducteur comprend en outre au moins une des suivants :
- la détermination d'une vitesse de conduite cible en fonction d'au moins un des suivants: une courbure de la voie de circulation étroite (311) et/ou d'un trajet déterminé, une distance par rapport à un véhicule voisin (300a), une condition météorologique, un état de la route, une limitation de vitesse ;
- la détermination d'une situation de conduite critique en fonction d'un mouvement d'au moins un véhicule voisin (300a).

13. Entité d'assistance au conducteur (100) qui est configurée pour aider un conducteur d'un véhicule (300) lors du passage d'une voie de circulation étroite (311), l'entité d'assistance au conducteur (100) comprenant :
- une interface (124) qui est configurée pour récupérer des données d'image 3D (201) à partir d'une caméra temps de vol (121), et qui est configurée en outre pour récupérer des données d'image 2D (202) à partir d'une caméra 2D (122),
dans lequel à la fois les données d'image 3D (201) et les données d'image 2D (202) représentent un environnement du véhicule (300),
dans lequel un champ de vision (361) de la caméra temps de vol (121) chevauche au moins en partie un champ de vision (362) de la caméra 2D,
- au moins un processeur (125) qui est configuré pour :
- déterminer une position de l'au moins un objet (300a, 350, 351, 352) dans les données d'image 3D (201),
- pour chaque position déterminée : identifier un type de l'objet respectif (300a, 350, 351, 352) basé sur au moins les données d'image 2D (202),
- en fonction du type déterminé de l'au moins un objet (300a, 350, 351, 352) et en fonction de la position déterminée de l'au moins un objet (300a, 350, 351, 352) : estimer des dimensions de la voie de circulation étroite (311) par rapport au véhicule (300),
- fournir sélectivement une assistance au conducteur lors du passage de la voie de circulation étroite (311) en fonction des dimensions estimées,
dans lequel la fourniture de l'assistance au conducteur comprend en outre :
la détermination d'un trajet contigu (310) en fonction des dimensions déterminées de la voie de circulation étroite (311) et en outre la prise en compte d'une courbure maximum admissible du trajet.

14. Entité d'assistance au conducteur selon la revendication 13,
dans lequel l'entité d'assistance au conducteur (100) est configurée en outre pour exécuter un procédé selon l'une quelconque des revendications 1 - 12.
